(19) Europäisches Patentamt
European Patent Office
Office européen des brevets

(11) EP 0 841 088 B1

# (12) EUROPÄISCHE PATENTSCHRIFT

(45) Veröffentlichungstag und Bekanntmachung des Hinweises auf die Patenterteilung:
**30.05.2001 Patentblatt 2001/22**

(51) Int Cl.$^7$: **B01J 13/00**, B01J 13/16

(21) Anmeldenummer: **97118626.7**

(22) Anmeldetag: **27.10.1997**

## (54) Mikrokapseln unter Verwendung von Iminooxadiazindion-Polyisocyanaten

Microcapsules obtained from imino-oxa-diazindione polyisocyanate

Microcapsules obtenues par utilisation de polyisocyanate d'iminooxadiazinione

(84) Benannte Vertragsstaaten:
**BE DE ES FR GB IT PT**

(30) Priorität: **08.11.1996 DE 19646110**

(43) Veröffentlichungstag der Anmeldung:
**13.05.1998 Patentblatt 1998/20**

(73) Patentinhaber: **BAYER AG**
**51368 Leverkusen (DE)**

(72) Erfinder:
- **Weisser, Jürgen, Dr.**
  **41542 Dormagen (DE)**
- **Richter, Frank, Dr.**
  **51373 Leverkussen (DE)**
- **Dieris, Carl-Gerd, Dr.**
  **41539 Dormagen (DE)**
- **Krohn, Wolfgang, Dr.**
  **51061 Köln (DE)**

(56) Entgegenhaltungen:
**EP-A- 0 016 366**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 841 088 B1

## Beschreibung

Die vorliegende Erfindung betrifft Mikrokapseln mit Wänden aus Polyharnstoffen und Polyiminoharnstoffen, ein Verfahren zu deren Herstellung und kohlefreie Durchschreibepapiere, die Farbgeber beinhaltende derartige Mikrokapseln enthalten.

Der Einsatz von Mikrokapseln, i. a. in Form von Mikrokapseldispersionen, erfolgt für viele Anwendungen, z. B. zur Herstellung kohlefreier Durchschreibepapiere, in den Bereichen Pharmazie, Pflanzenschutz, Kosmetik, Katalyse und in der Klebstoffindustrie.

Bei der erstgenannten Anwendung werden sogenannte Farbgeber mit hydrophoben, weitgehend inerten Ölen vermischt und diese Mischung mikroverkapselt, wobei wäßrige Kapseldispersionen entstehen. Die dispergierten Kapseln besitzen üblicherweise einen Durchmesser im Bereich von 3 bis 25 µm.

Die Verarbeitung zu kohlefreien Durchschreibepapieren geschieht in der Regel durch Auftrag einer solchen Kapseldispersion auf Papier, gegebenenfalls zusammen mit Bindern, Abstandshaltern und/oder Zusatzstoffen und Kombination eines solchen mit Kapseln beschichteten Papiers (CB-Seite) mit einem Entwicklerpapier, das auf seiner Oberseite einen Entwickler für Farbgeber enthält. Beim Gebrauch dieser Papierkombination zerplatzen Mikrokapseln dort, wo der mechanische Druck eines Schreibgerätes einwirkt. Das Farbgeber enthaltende Öl gerät dort in Kontakt mit dem Entwickler. So bildet sich auf der Seite, die den Entwickler enthält (CF-Seite), ein Schriftbild.

Auch kombinierte Beschichtungen, d.h. Beschichtungen eines Papiers mit einer Mischung aus Kapseln und Entwickler, sind bekannt. Auf derartigen Papieren (SC-Papieren) lassen sich Durchschriften von unbeschichteten Papieren erzeugen.

Zur Herstellung von Mikrokapseln gibt es zahlreiche bekannte physikalische, physikalisch-chemische und chemische Verfahren.

Zur Mikroverkapselung von Farbgebern, Pflanzenschutzmitteln und Kosmetika werden häufig Verfahren herangezogen, die auf dem chemischen Prinzip der sogenannten Grenzflächenpolymerisation oder Grenzflächenpolyaddition beruhen.

Diese Verfahren lassen sich technisch einfach und in reproduzierbarer Weise durchführen. Letzteres gilt vor allem bei der Grenzflächenpolyaddition.

Bei der Grenzflächenpolyaddition werden in einem ersten Verfahrensschritt die zu verkapselnden Stoffe in einem hydrophoben Öl gelöst, mit einem zur Wandbildung befähigten Polyisocyanat versetzt und anschließend mit Wasser zu einer Öl-in-Wasser-Emulsion verarbeitet. Die emulgierten Öltröpfchen besitzen dabei eine Größe, die ungefähr der Größe der späteren Mikrokapsel entspricht. Die Wasserphase der Emulsion enthält üblicherweise Schutzkolloide, z.B. Polyvinylalkohol, Carboxymethylcellulose, Emulgatoren und/oder Stabilisatoren, um ein Zusammenfließen der Öltröpfchen zu vermeiden.

Zur Bildung der Kapselwand vermischt man in einem zweiten Verfahrensschritt die Öl-in-Wasser-Emulsion mit einem sogenannten Vernetzer, der in der Lage ist, an der Grenzfläche zwischen Öl und Wasser mit dem im Öl gelösten Isocyanat unter Ausbildung eines polymeren Films zu reagieren. Bei den Vernetzern kann es sich beispielsweise um Di- oder Polyamine, Diole, Polyole, polyfunktionelle Aminoalkohole, um Guanidin und Salze des Guanidins und davon abgeleitete Verbindungen handeln.

Der dritte Verfahrensschritt umfaßt die sogenannte Nachbehandlung der frisch hergestellten Kapseldispersion. Hierbei wird unter Kontrolle von Temperatur und Verweilzeit und gegebenenfalls unter Einsatz weiterer Hilfsmittel, die Reaktion zwischen Polyisocyanat und Vernetzer zu Ende geführt.

Grenzflächen-Polyadditionsverfahren dieser Art sind beispielsweise beschrieben in US-A 4 021 595, US-A 4 193 889, US-A 4 428 978, EP-A 0 392 876, DE-A 2 757 017 und EP-A 0 535 384.

Bei den bekannten Verfahren werden di- und/oder höherfunktionelle aliphatische oder aromatische Isocyanate eingesetzt. Die bisher für Mikroverkapselungen verwendeten Polyisocyanate sind meistens aliphatischer Art und leiten sich überwiegend von den folgenden Grundbausteinen ab:

Hexamethylendiisocyanat (HDI), Biurete des HDI, Isocyanurate des HDI, Uretdione des HDI, Oxadiazintrione des HDI, Kombinationen von zwei oder mehr der vorgenannten Typen und Umsetzungsprodukte der vorgenannten Typen mit Mono- und/oder Polyhydroxylverbindungen (Urethane, Allophanate) und/oder Di- und/oder Polyaminen (Harnstoffe, Biurete), die freie Isocyanatgruppen enthalten.

Beim Einsatz von Polyisocyanaten der vorstehend genannten Arten in die oben beschriebene Herstellung von Mikrokapseln nach dem Grenzflächenpolyadditionsverfahren resultieren auch einige Nachteile. So ist der Einsatz von Hexamethylendiisocyanat wegen des hohen Dampfdruckes und der bekannten, unangenehmen physiologischen Eigenschaften monomerer aliphatischer Diisocyanate problematisch. Polyisocyanate der sonstigen angegebenen Typen sind diesbezüglich zwar unkritisch, bei ihrem Einsatz hat sich allerdings gezeigt, daß zur Herstellung möglichst feiner Mikrokapseldispersionen häufig die Einwirkung relativ hoher Scherkräfte zur Herstellung der beschriebenen Öl-in-Wasser-Emulsion nötig ist, was einen hohen Energieaufwand erfordert. Hinzu kommt, daß der Kapselanteil in den fertigen Dispersionen üblicherweise nach oben hin auf ca. 45 Gew.-% begrenzt ist.

Die Möglichkeit, Mikrokapseldispersionen mit Feststoffanteilen über 40 Gew.-%, ausnahmsweise sogar über 50 Gew.-%, herzustellen, ist zwar grundsätzlich beschrieben. Sie erfordert aber einen großen Aufwand, der umso höher ist, je höher der angestrebte Feststoffgehalt liegt (siehe US-A 5 164 126).

Die zur Mikroverkapselung eingesetzten Polyisocyanate sollten auch eine ausreichende Löslichkeit in dem hydrophoben Öl aufweisen. Das trifft jedoch, insbesondere auf die sich vom Hexamethylendiisocyanat ableitenden Polyisocyanate mit Uretdion-, Biuret, Allophanat- und/oder Isocyanuratstruktur nur bedingt zu.

Der vorliegenden Erfindung lag demzufolge die Aufgabe zugrunde, Mikrokapseln zu entwickeln, die bei Wahrung oder Verbesserung der technischen Vorteile bekannter Mikrokapseln weniger Energie bei der Emulgierung erfordern und ohne besonderen Aufwand höhere Kapselanteile in Mikrokapseldispersionen zulassen.

Es wurden nun Mikrokapseln gefunden, die dadurch gekennzeichnet sind, daß ihre Wände aus Umsetzungprodukten von $NH_2$-Gruppen enthaltenden Vernetzern mit Isocyanaten der Formel (I) bestehen

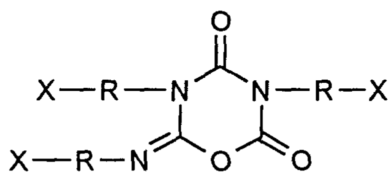

(I) ,

in der

die Reste R gleich oder verschieden sind und jeweils für zweibindiges, gegebenenfalls substituiertes $C_1$-$C_{20}$-(Cyclo)alkyl oder zweibindiges, gegebenenfalls substituiertes $C_7$-$C_{20}$-Aralkyl und

die Reste X gleich oder verschieden sind und jeweils für NCO oder einen Rest stehen, der durch die Entfernung von N-gebundenen Substituenten aus Oligomeren von Diisocyanaten entsteht, die Harnstoff-, Biuret-, Uretdion-, Isocyanurat-, Oxadiazintrion-, Urethan-, Allophanat- und/oder Iminooxadiazindion-Strukturelemente aufweisen, oder

daß ihre Wände Umsetzungsprodukte von $NH_2$-Gruppen enthaltenden Vernetzern mit Isocyanaten der Formel (I) enthalten.

Die Reste R können gesättigte oder ungesättigte, geradkettige oder verzweigte Alkylgruppen (auch als Aralkyl) aufweisen. Als weitere Substituenten für R (außer X) kommen z.B. Halogen-, Stickstoff-, Sauerstoff- und/oder Schwefelatome in Frage.

In Formel (I) sind die Reste R vorzugsweise gleich oder verschieden und stehen für zweibindiges, gegebenenfalls substituiertes $C_1$-$C_{10}$-Alkyl. Die Reste X sind vorzugsweise gleich oder verschieden und stehen für NCO und/oder einen Rest, der durch die Entfernung von N-gebundenen Substituenten aus Oligomeren von Isocyanaten der Formel (II)

$$OCN\text{-}R\text{-}NCO \qquad (II),$$

in der R die bei Formel (I) angegebene Bedeutung hat,
entsteht, wobei die Oligomeren Harnstoff-, Biuret-, Uretdion-, Isocyanurat-, Oxadiazintrion-, Urethan-, Allophanat- und/oder Iminooxadiazindion-Strukturelemente aufweisen. Die Oligomeren können z.B. einen durchschnittlichen Oligomerisierungsgrad $\bar{n}$ von 2 bis 20 aufweisen, wobei n die Anzahl der eingebauten Diisocyanateinheiten im Oligomermolekül bedeutet.

Besonders bevorzugt sind alle Reste R gleich. Die Reste X sind besonders bevorzugt gleich oder verschieden und stehen für NCO und/oder für einen der bevorzugten Reste, wobei die Reste mit Isocyanurat- und Iminooxadiazindion-Strukturelementen mindestens 50 mol-% aller X-Reste ausmachen.

Ganz besonders bevorzugt sind alle Reste R $-(CH_2)_6$-Gruppen.

Die Isocyanate der Formel (I) können als reine Verbindungen, als beliebige Gemische von Verbindungen der Formel (I) untereinander, als Gemische einer reinen Verbindung der Formel (I) mit einem oder mehreren anderen Isocyanaten oder als Gemische von mehreren Verbindungen der Formel (I) mit einem oder mehreren anderen Isocyanaten zum Einsatz gelangen.

Bei den anderen Isocyanaten kann es sich um die verschiedensten aliphatischen, aromatischen und aromatisch-aliphatischen 2- und höherfunktionellen Isocyanate handeln, vorzugsweise um solche, die zur Herstellung von Mikrokapseln bekannt sind. Besonders bevorzugte andere Isocyanate sind Hexamethylendiisocyanat, Isophorondiisocyanat und/oder freie Isocyanatgruppen aufweisende Derivate des Hexamethylendiisocyanats und des Isophorondiisocyanats, die Biuret-, Isocyanurat-, Uretdion- und/oder Oxadiazintriongruppen enthalten. Einige sogenannte andere Polyisocyanate sind z.B. beschrieben in EP-A 227 562, EP-A 164 666 und EP-A 16 378.

Wenn man erfindungsgemäß einzusetzende Isocyanate im Gemisch mit anderen Isocyanaten einsetzt, dann enthalten diese Gemische vorzugsweise mindestens 20 Gew.-% erfindungsgemäß einzusetzende Isocyanate. Besonders bevorzugt sind Gemische, die mindestens 30 Gew.-% erfindungsgemäß einzusetzende Isocyanate enthalten.

Isocyanatgemische, die man erfindungsgemäß einsetzen kann, können direkt bei der Herstellung von Isocyanaten anfallen, man kann sie aber auch durch Mischung einzelner Komponenten herstellen, wobei einzelne Komponenten sowohl reine Verbindungen als auch ihrerseits Gemische sein können.

Isocyanate der Formel (I) bzw. solche Isocyanate enthaltende Gemische kann man beispielsweise erhalten, indem man entsprechende Polyisocyanat(mischung)en mit einem NCO-Gehalt von weniger als 75 Gew.-% unter dem Einfluß von Katalysatoren auf der Basis von Hydrogen(poly)fluoriden oligomerisiert. Die Katalysatoren können z.B. der Formel (III) entsprechen

$$\{M[nF^{-}\ (HF)_{m}]\} \qquad (III),$$

in der

m größer als Null, bevorzugt größer 0,1 und besonders bevorzugt größer als 0,5 ist und

M ein n-fach geladenes Kation oder einen n-wertigen Rest darstellt.

Verbindungen der Formel (III) sind teilweise kommerziell erhältlich oder lassen sich in einfacher Weise und in jeder beliebigen Stöchiometrie durch Abmischen entsprechender Fluoride mit der entsprechenden Menge Fluorwasserstoff herstellen. Fluorwasserstoff kann dabei beispielsweise als Lösung in einem protischen oder aprotischen organischen Lösungsmittel zugegeben werden. Es sind auch Fluorwasserstoff/Aminkomplexe kommerziell verfügbar, z.B. mit Pyridin und Melamin, die hier verwendbar sind. Hydrogenfluoride der Formel (III) sind physiologisch unproblematisch. Es kommt hinzu, daß durch die Addition von Fluorwasserstoff an Isocyanate unter Bildung von Carbamoylfluoriden die Anwesenheit von freiem Fluorwasserstoff in den hergestellten Verbindungen der Formel (I) praktisch ausgeschlossen ist.

Der Fluorwasserstoff-Anteil in den beschriebenen Katalysatorsystemen kann in weiten Grenzen variieren. D. h. es ist unwesentlich, ob es sich um definierte Verbindungen wie Monohydrogendifluoride, Dihydrogentrifluoride usw. handelt, die beispielsweise in Form ihrer Kaliumsalze bekannt sind oder um beliebige Mischungen solcher definierter Verbindungen mit überschüssigem Fluorid einerseits oder überschüssigem Fluorwasserstoff andererseits.

Zur Herstellung von Isocyanaten der Formel (I) und sie enthaltender Mischungen ist es unwesentlich, ob der Katalysator im zu oligomerisierenden Polyisocyanat löslich ist (homogene Katalyse), oder nicht (heterogene Katalyse). Auch können weitere Stoffe oder Stoffgemische bei der Katalyse zugesetzt werden, z.B. Amine, Alkohole und/oder Phenole, Lösungsmittel für den Katalysator und/oder das Ausgangsisocyanat, Antioxydanzien und/oder Matrizes zur adsorptiven oder kovalenten Bindung des Katalysators. Auch kann der zur Bildung der Verbindungen der Formel (III) nötige Fluorwasserstoff separat, gegebenenfalls in gelöster Form, dem Isocyanat(gemisch) zugefügt werden. Weiterhin können beliebige Substanzen, die unter den Reaktionsbedingungen Fluorwasserstoff für die Katalyse zur Verfügung stellen, zur Herstellung (mit)verwendet werden. So eignen sich hierzu beispielsweise beliebige Carbamoylfluoride.

Die Herstellung der Isocyanate der Formel (I) und sie enthaltender Gemische kann z.B. in einem Temperaturbereich von 20 bis 200°C, vorzugsweise 30 bis 90°C erfolgen. Die Umsetzung kann quantitativ erfolgen oder bei beliebigen Umsetzungsgraden unterbrochen werden. In letzterem Falle kann die Reaktion abgestoppt werden z.B. durch die Zugabe von Säuren oder Säurederivaten (z.B. Benzoylchlorid, saure Ester phosphorhaltiger Säuren oder phosphorhaltige Säuren, silylierte Sulfonsäuren, Mineralsäuren, nicht jedoch Fluorwasserstoff), durch adsorptive Bindung des Katalysators und anschließende Abtrennung durch Filtration oder durch thermische Desaktivierung. Die Katalysatorkonzentrationen kann, bezogen auf eingesetztes Polyisocyanat, z.B. zwischen 5 ppm und 5 Gew.-% liegen.

Gleichzeitig mit der Bildung von Iminooxadiazindion-Isocyanaten kann gegebenenfalls eine Trimerisierung unter Ausbildung von Isocyanuratstrukturen, eine Dimerisierung unter Ausbildung von Uretdionstrukturen, ein $CO_2$-Einbau unter Oxadiazintrionbildung, eine Urethanisierung und/oder eine Allophanatisierung stattfinden.

Zur Herstellung erfindungsgemäß verwendbarer Polyisocyanate können z.B. bekannte aliphatische, cycloaliphatische und araliphatische Polyisocyanate eines NCO-Gehaltes von weniger als 70 Gew.-% in reiner Form oder als beliebige Mischungen untereinander verwendet werden. Beispielhaft seien genannt: (Methyl)cyclohexandiisocyanate, Ethylcyclohexandiisocyanate, Propylcyclohexandiisocyanate, Methyl-diethyl-cyclohexandiisocyanate, Propandiisocyanate, Butandiisocyanate, Pentandiisocyanate, Hexandiisocyanate (z.B. HDI), Heptandiisocyanate, Octandiisocyanate, Nonandi- und -triisocyanate, Dekandi- und -triisocyanate, Undekandi- und -triisocyanate, Dodecandi- und -triisocyanate, Isophorondiisocyanat, Bis(isocyanatocyclohexyl)methan und 4(3)-Isocyanatomethyl-1-methyl-cyclohexylisocyanat.

Die Isocyanate der Formel (I), sie enthaltende Gemische und deren Herstellung sind von einer eigenen älteren Patentanmeldung umfaßt.

Überraschend ist die hohe chemische und mechanische Stabilität der mit Isocyanaten der Formel (I) und $NH_2$-Gruppen enthaltenden Vernetzern hergestellten Kapselwände sowie die gute Löslichkeit dieser Isocyanate in den für die Mikroverkapselung in Frage kommenden organischen, mit Wasser nicht mischbaren, gegenüber Isocyanaten inerten Lösungsmitteln (z.B.: alkylaromatische Kohlenwasserstoffe wie Diisopropylnaphthalin, substituierte Biphenyle wie sec.-Butyldiphenyl, Phenyl-xylyl-ethane, chlorierte Paraffine, Phthalate, natürliche Öle wie Sojaöl oder Rapsöl und niedrigschmelzende Fette wie Kokosfett).

Die vorstehend genannten Öle können bei technischen Verkapselungen zur Verbilligung und/oder zur Dichteeinstellung gegebenenfalls mit aliphatischen Kohlenwasserstoffen synthetischer oder natürlicher Herkunft verschnitten werden. Bei diesen Verschnittmitteln kann es sich z.B. um Paraffingemische (z.B. Exxsol® -Typen), Isohexadecan, hydrierte naphthenische Erdölfraktionen (z.B. Nytex® -, Nyflex® - und Gravex® -Typen) und Dodecylbenzole (z.B. Marlikan® ) handeln.

Isocyanate der Formel (I) sind für Verkapselungen, in denen mit den vorstehend beschriebenen Ölen oder Mischungen aus derartigen Ölen mit Verschnittmitteln gearbeitet wird, besonders gut geeignet.

Die erfindungsgemäßen Mikrokapseln werden vorzugsweise zur Herstellung kohlefreier Durchschreibepapiere verwendet. Sie enthalten dann als zu verkapselnden Stoff in Ölen gelöste Farbgeber. Es kommen hierfür Farbgeber der verschiedensten Typen in Frage, insbesondere Triphenylmethanverbindungen, Diphenylmethanverbindungen, Bisindolylphthalidverbindungen, Bisarylcarbazolylmethanverbindungen, Xanthenverbindungen, Benzoxazinverbindungen, Thiazinverbindungen und Spiropyranverbindungen, insbesondere solche, die als Farbgeber zur Herstellung kohlefreier Durchschreibepapiere bekannt sind. Es können auch Gemische mehrerer Farbgeber eingesetzt werden. Einige einsetzbare Farbgeber sind z.B. beschrieben in EP-A 591 106, EP-A 315 901, EP-A 234 349, DE-A 3 622 262 und EP-A 187 329.

Bei der Herstellung erfindungsgemäßer Mikrokapseln kann die wäßrige Phase gegebenenfalls Emulgatoren, Stabilisatoren und/oder die Koaleszenz verhindernde Stoffe enthalten. Emulgatoren können gegebenenfalls auch in der Ölphase enthalten sein. Die Menge derartiger Zusätze kann z.B. im Bereich von 0,01 bis 2 Gew.-%, bezogen auf die jeweilige Phase, liegen.

Die erfindungsgemäßen Mikrokapseln können nicht nur Farbgeber, sondern auch andere verkapselte Materialien enthalten, z.B. Parfümöle, Klebstoffe, Pharmazeutika, Insektizide, Herbizide oder Repellents. Die zu verkapselnden Stoffe dürfen unter den Verkapselungsbedingungen natürlich nicht mit Isocyanaten reagieren.

Erfindungsgemäße Mikrokapseln werden aus Isocyanaten der Formel (I) durch Umsetzung mit $NH_2$-Gruppen enthaltenden Vernetzern hergestellt. Die Vernetzer sind imstande, an einer Phasengrenzfläche mit Isocyanatgruppen zu reagieren. Hierfür kommen beispielsweise folgende Verbindungen in reiner Form oder als Mischungen untereinander in Frage: Hydrazin, Guanidin und dessen Salze, Hydroxylamin, Di- und Polyamine und Aminoalkohole. Ein bevorzugtes Guanidinsalz ist Guanidincarbonat. Beim Einsatz von Guanidinsalzen starker Säuren ist der Zusatz einer Base erforderlich. Beispiele für Di- und Polyamine und Aminoalkohole sind: Ethylendiamin, Hexamethylendiamin, Isophorondiamin, Diethylentriamin, Ethanolamin, Diethanolamin und Triethanolamin. Auch Wasser kann prinzipiell als Vernetzer wirken, indem es durch Addition an eine NCO-Gruppe und nachfolgende $CO_2$-Abspaltung eine Aminogruppe erzeugt, die dann mit einer NCO-Gruppe unter Vernetzung reagieren kann.

Bevorzugt sind Mikrokapseln mit Wänden hergestellt aus erfindungsgemäß zu verwendenden Isocyanaten, Guanidincarbonat, Diethylentriamin oder Guanidincarbonat/Diethylentriamin-Gemischen als Vernetzer.

Die Menge der erfindungsgemäß einzusetzenden Isocyanate bewegt sich in dem für Grenzflächenpolyadditionsverfahren üblichen Rahmen, beispielsweise zwischen 2 und 20 Gew.-% Wandanteil (siehe Definition 1), bezogen auf die gesamte, zur Verkapselung vorgesehene Ölphase. Bevorzugt ist ein Wandanteil im Bereich zwischen 4 und 15 Gew.-%. Bei der Berechnung des Wandanteils wird der zur Abreaktion benötigte Vernetzer aus Gründen der Vereinfachung nicht berücksichtigt.

Definition 1

$$\% \text{ Wandanteil} = \frac{\text{Masse}_{\text{Isocyanat}}}{\text{Masse}_{\text{zu verkapselnde Ölphase}} + \text{Masse}_{\text{Isocyanat}}} \times 100$$

Die theoretische Menge des zur Wandbildung notwendigen Vernetzers errechnet sich aus a) dem Gehalt an Isocyanatgruppen des eingesetzten Isocyanats und b) dem Gehalt an reaktiven Amino- und/oder Hydroxylgruppen der verwendeten Vernetzerkomponente. Üblicherweise werden diese Mengenverhältnisse durch sogenannte Äquivalentgewichte ausgedrückt.

Definition 2

$$\text{Äquivalentgewicht}_{\text{Isocyanat}} = \frac{42}{\text{NCO-Gehalt *)}} \times 100$$

*) = z.B. titrimetrisch zu ermitteln (DIN 53 185)

Definition 3

$$\text{Äquivalentgewicht}_{\text{Vernetzer}} = \frac{\text{Molgewicht}_{\text{Vernetzer}}}{\text{Anzahl Reaktivgruppen im Molekül}}$$

Zur Reaktion sämtlicher in der Ölphase befindlicher NCO-Gruppen sind zumindest theoretisch gleich viele $NH_2$- und/oder OH-Gruppen erforderlich. Es ist deshalb vorteilhaft, das Isocyanat und den Vernetzer im Verhältnis ihrer Äquivalentgewichte einzusetzen. Es ist jedoch ebenfalls möglich, von der stöchiometrisch errechneten Vernetzermenge entweder nach unten abzuweichen, da bei Grenzflächenpolyadditionsverfahren eine Nebenreaktion des Isocyanates mit dem im Überschuß vorhandenen Wasser nicht auszuschließen ist, oder einen Überschuß der Vernetzerkomponente anzuwenden, weil ein solcher unkritisch ist.

Insbesondere wendet man deshalb den Vernetzer in einer Menge an, die zwischen 50 und 150 Gew.-% der theoretisch berechneten liegt. Bevorzugt liegt diese Menge zwischen 50 und 100 Gew.-%, bezogen auf die theoretisch berechnete Menge.

Die vorliegende Erfindung betrifft auch ein Verfahren zur Herstellung von Mikrokapseln, bei dem man eine Ölphase, die ein organisches, mit Wasser nicht mischbares, gegenüber Isocyanaten inertes Lösungsmittel, den zu verkapselnden Stoff und Isocyanate der Formel (I) enthält, in einer Wasserphase, die gegebenenfalls Zusatzstoffe enthält, emulgiert und der Emulsion einen $NH_2$-Gruppen enthaltenden Vernetzer zufügt, der mit Isocyanatgruppen reagieren kann.

Schließlich betrifft die vorliegende Erfindung auch kohlefreie Durchschreibepapiere, die Farbgeber in mikroverkapselter Form enthalten und dadurch gekennzeichnet sind, daß die Wände der Mikrokapseln Umsetzungsprodukte von Isocyanaten der Formel (I) mit Vernetzern enthalten.

Für das erfindungsgemäße Herstellungsverfahren der Mikrokapseldispersionen und für die daraus hergestellten kohlefreien Durchschreibepapiere gelten die oben gemachten Ausführungen zu den erfindungsgemäßen Mikrokapseln entsprechend.

Die vorliegende Erfindung hat den Vorteil, daß die Mikrokapseln bei ihrer Herstellung deutlich weniger Energie benötigen und höher konzentrierte Kapseldispersionen hergestellt werden können. Weiterhin zeichnen sich erfindungsgemäße Mikrokapseln durch hohe chemische Stabilität und gute Alterungsbeständigkeit aus.

Dies ist umso überraschender, als man die erfindungsgemäß einzusetzenden Iminooxadiazindione als Konstitutionsisomere der seit langem bekannten Isocyanurate (sog. Trimerisate) ebenfalls formal als Isocyanat-Trimere auffassen könnte. Andererseits ist bezüglich des cyclischen Anhydridsegments der erfindungsgemäß zu verwendenden Iminooxadiazindione eine strukturelle Verwandschaft zu Oxadiazintrionen gegeben. Letztere sind in der Technologie der Mikroverkapselung seit langem etabliert. Beim Austausch der vorgenannten für Mikroverkapselungen bekannten Polyisocyanate gegen die erfindungsgemäß einzusetzenden waren deshalb eigentlich keine Verbesserungen zu erwarten (s. hierzu auch die unten stehenden Formeln (I), (IV) und (V)).

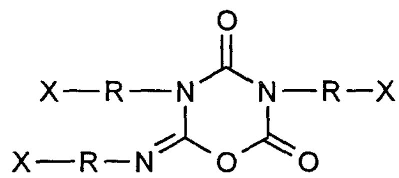 (I)

Iminooxadiazindion-Typ

erfindungsgemäß

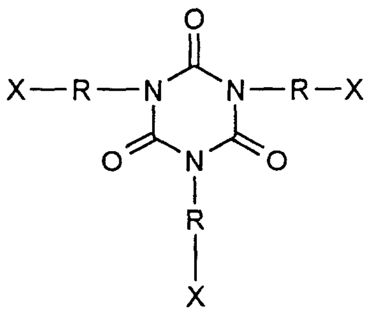 (IV)

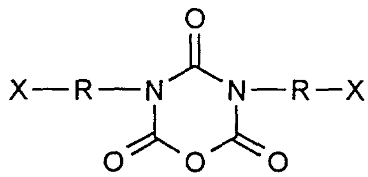 (V)

Isocyanurat-Typ

Stand der Technik

Oxadiazintrion-Typ

Stand der Technik

Besonders ausgeprägt sind die erfindungsgemäß erzielbaren Vorteile beim Einsatz der erfindungsgemäß einzusetzenden Isocyanate in Kombination mit Guanidincarbonat als Vernetzer.

**Beispiele**

Die Beispiele 1 bis 12 beziehen sich auf Mikrokapseldispersionen für kohlefreie Durchschreibepapiere.

**Beispiel 1** (zum Vergleich):

Ein konstanter Strom (32,0 kg/h) Bis(isocyanatohexyl)oxadiazintrion-Oligomerengemisch wurde zusammen mit einem konstanten Strom (288,0 kg/h) Farbgeberlösung (3 Gew.-% Kristallviolettlacton in Diisopropylnaphthalin) durch einen statischen Mischer gepumpt, wobei eine weitgehend homogene organische Phase entstand.

Diese wurde zusammen mit einem Strom einer Wasserphase (420,5 kg/h) bestehend aus deionisiertem Wasser enthaltend 1 Gew.-% Polyvinylalkohol (AIRVOL® 523, Air Products Inc.) kontinuierlich einem üblichen Emulgierapparat zugeführt. Letzterer war nach dem Rotor-Stator-Prinzip aufgebaut, was bedeutet, daß schnell rotierende, geschlitzte Scheiben, die sich mit hoher Umfangsgeschwindigkeit in feststehenden, ebenfalls geschlitzten Statorkammern bewegen, ein hohes Scherfeld erzeugen.

Öl- und Wasserphase werden in derartigen Emulgierapparaten in wenigen Sekunden in eine feinteilige Emulsion umgewandelt, wobei die Tröpfchengröße in der Emulsion der Größe der späteren Mikrokapseln sehr nahe kommt. Die Öltröpfchengröße kann über die Drehzahl der Maschine reguliert werden.

Im vorliegenden Beispiel mußte eine sehr hohe Drehzahl von 2400 U/min eingestellt werden, um eine mittlere Tröpfchengröße von 6,8 µm (gemessen mit einem handelsüblichen Gerät, Multisizer II, Coulter Electronics Inc.) zu erzielen.

Der den Emulgierapparat verlassende ca. 40 gew.-%ige Emulsionsstrom (740,5 kg/h) wurde über einen Kühler in einen Reifekessel geleitet und dort kontinuierlich mit einer 9 gew.-%igen wäßrigen Lösung von Diethylentriamin in deionisiertem Wasser (= Vernetzerlösung) vermischt. Nach Befüllung des Kessels stellte man die Zufuhr des Emulsionsstroms und des Vernetzers ab und heizte den Kesselinhalt mittels einer Wandheizung unter langsamem Rühren auf eine Temperatur von ca. 60°C. Nach zweistündigem Rühren bei dieser Temperatur resultierte eine ca. 40 gew.-%ige Kapseldispersion (mittlerer Kapseldurchmesser 6,5 µm, gemessen wie oben angegeben), die zur Herstellung eines kohlenfreien Durchschreibepapiers verwendet wurde.

Unter x gew.-%-igem Emulsionsstrom bzw. x gew.-%.-iger Kapseldispersion wird der Gewichtsanteil Isocyanat + Farbgeberlösung bezogen auf das Gesamtgewicht der Emulsion bzw. Dispersion verstanden.

**Beispiel 2** (erfindungsgemäß)

Es wurde die im Beispiel 1 beschriebene technische Apparatur benutzt, jedoch wurde die Art des Isocyanats, die Menge der Farbgeberlösung und die Menge der Wasserphase geändert. Zum Einsatz kamen:

Ein Isocyanat, das gemäß Beispiel 15 erhalten worden war (32,0 kg/h).

Die gleiche Farbgeberlösung wie in Beispiel 1 (368 kg/h).

Die gleiche Wasserphase wie in Beispiel 1 (319,1 kg/h).

Als Vernetzerlösung wurde eine 10 gew.-%ige Lösung von Guanidincarbonat in Wasser (80,9 kg/h) verwendet. Da der Vernetzer erst nach der Emulsionsbildung zugesetzt wird, ist er ohne Einfluß auf die zur Emulsionsbildung nötige Energie.

Bei diesem Beispiel wurde zur Erzielung der Tröpfchengröße von 6,7 µm nur eine Drehzahl des Emulgierapparates von 1 800 U/min benötigt, und dies, obwohl hier eine 50 gew.-%ige Emulsion vorlag.

Man sieht, daß mit einem erfindungsgemäß einzusetzenden Isocyanat mit deutlich geringerem Energieaufwand pro Masseeinheit der Ölphase gleich feinteilige und sogar höher konzentrierte Emulsionen erzeugt werden können als sie beim Einsatz von bekannten Isocyanaten resultieren (719,1 kg 50 gew.-%ige Emulsion gemäß vorliegendem Beispiel anstelle von 740,5 kg 40 gew.-%ige Emulsion gemäß Beispiel 1).

Auch bei diesem Beispiel wurde nach der Befüllung des Reifekessels mit der vernetzten 50 gew.-%igen Emulsion der Emulgierapparat abgestellt. Man heizte den Kesselinhalt über die Mantelheizung auf 65°C und rührte 2 Stunden bei dieser Temperatur nach.

Es wurde eine ca. 50 gew.-%ige Mikrokapseldispersion erhalten (mittlerer Kapseldurchmesser 6,4 µm), die zur Herstellung eines hochwertigen kohlefreien Durchschreibepapiers diente.

**Beispiele 3 bis 11** (erfindungsgemäß) **und Beispiel 12** (nicht erfindungsgemäß)

Allgemeine Durchführung

Nacheinander wurden die Teilschritte A bis I durchgeführt.

**A Farbgeberlösungen**

Die Farbgeberlösungen 1 bis 3 wurden hergestellt durch Auflösen der entsprechenden pulverförmigen Farbgeber (Handelsware) in verschiedenen Ölen (Handelsware) bei einer Temperatur von ca. 110°C.

Farbgeberlösung 1

| | |
|---|---|
| 95,5 Gew.-% | Diisopropylnaphthalin (KMC 113, RÜTAG AG) |
| 3,15 Gew.-% | Kristallviolettlacton (Pergascript® Blau I2R, CIBA GEIGY AG) |
| 0,67 Gew.-% | Pergascript® Blau SRB (CIBA GEIGY AG) und |
| 0,67 Gew.-% | Pergascript® Rot I6B (CIBA GEIGY AG) |

Farbgeberlösung 2

| | |
|---|---|
| 95,0 Gew.-% | Kokosfett (Cocopur® , W. Rau GmbH) |
| 0,65 Gew.-% | Pergascript® Blau SRB |
| 0,75 Gew.-% | Pergascript® Grün I2GN (CIBA GEIGY AG) |
| 0,35 Gew.-% | Pergascript® Rot I6B |
| 1,63 Gew.-% | Farbgeber PSD 184 (Nippon Soda) und |

| | |
|---|---|
| 1,62 Gew.-% | Farbgeber Black 15 (Yamamoto Chemicals) |

Farbgeberlösung 3

| | |
|---|---|
| 76 Gew.-% | alkylaromatischer Kohlenwasserstoff SAS 296 (Nisseki Chemical Texas) |
| 19 Gew.-% | Nytex® 800 |
| 0,65 Gew.-% | Pergascript® Blau SRB |
| 0,75 Gew.-% | Pergascript® Grün I2GN |
| 0,35 Gew.-% | Pergascript® Rot I6B |
| 1,63 Gew.-% | Farbgeber PSD 184 (Nippon Soda) und |
| 1,62 Gew.-% | Farbgeber Black 15 (Yamamoto Chemicals). |

**B Herstellung der Polyvinylalkohollösung** (Wasserphase)

In allen Fällen wurde mit einer 1,0 gew.-%igen Polyvinylalkohollösung, hergestellt durch Mischen von AIRVOL® 523 mit der entsprechenden Menge kaltem, deionisiertem Wasser, 15-minütigem Quellen bei Zimmertemperatur und nachfolgendem Aufheizen auf 100°C bis zur völligen Auflösung, gearbeitet.

**C Herstellung der Vernetzerlösung**

Zur Anwendung gelangten eine 10 gew.-%ige Guanidincarbonatlösung (GUCA) und eine 9 gew.-%ige Diethylentriaminlösung (DETA), beide hergestellt durch Auflösung der entsprechenden Vernetzer bei Zimmertemperatur in deionisiertem Wasser.

**D Herstellung der aktiven Ölphase**

Unter "aktiver Ölphase" wird das Gemisch aus Farbgeberlösung, gegebenenfalls Verschnittmittel und dem eingesetzten Polyisocyanat verstanden. Sie wurde hergestellt durch Vermischung der Farbgeberlösung mit der angewendeten Isocyanatkomponente bei Zimmertemperatur im Becherglas bis zur augenscheinlichen Homogenisierung.

**E Herstellung der Voremulsion**

Diese wurde durch Vermischen mittels schnellaufender Laborrührer von aktiver Ölphase mit Polyvinylalkohollösung bei Zimmertemperatur erhalten.

**F Herstellung der Feinemulsion**

Die Voremulsion wurde mittels eines handelsüblichen, hochtourigen Laboremulgiergerätes (Megatron® , KINEMATICA AG) zu einer Feinemulsion der gewünschten Teilchengröße verarbeitet, wobei jeweils in einem Vorversuch die dazu notwendige Tourenzahl ermittelt wurde. Die Tourenzahl in U/min ist ein Maß für die erforderliche Emulgierenergie. Während des Emulgierschrittes wurde durch äußere Kühlung eine Temperatur von 30 bis 33°C eingehalten.

**G Vernetzung der Feinemulsion**

Zur abgewogenen Menge der Feinemulsion wurde bei Zimmertemperatur unter langsamem Rühren eine berechnete Menge Vernetzerlösung gegeben.

**H Reifung der Kapseldispersion**

Die vernetzten Dispersionen wurden unter langsamem Rühren im Wasserbad auf 60°C (bei Vernetzung mit Diethylentriamin) oder 70 bis 80°C (bei Vernetzung mit Guanidincarbonat) aufgeheizt und bei dieser Temperatur noch 2 Stunden nachgerührt.

**I Prüfung der Kapseldispersion**

An der resultierenden Kapseldispersion wurde bestimmt:

a) der Feststoffgehalt mittels handelsüblicher Trockenwaage,

b) die Teilchengröße mit einem handelsüblichen Teilchengrößenmeßgerät und

c) die Kapseldichtigkeit durch Beschichtung eines handelsüblichen Entwicklerpapiers mit der Kapseldispersion mittels Rakel (entsprechend 2 g Trockenkapseln pro $m^2$ Papier), nachfolgender Trocknung im Luftstrom bei Zimmertemperatur und visueller Beurteilung, wobei Blau- oder Schwarzfärbung ein Indiz für undichte Kapseln ist und bei dichten Kapseln visuell keine Verfärbungen gegenüber dem unbeschichteten Papier festzustellen sind.

Der Feststoffgehalt ist der Gehalt der Kapseldispersion an Trockenkapseln. Trockenkapseln sind die Anteile der Kapseldispersion, die bei einer Trocknungstemperatur von 150°C und normalem Luftdruck nicht flüchtig sind.

Die Beispiele 3 bis 11 verdeutlichen, daß sich aus erfindungsgemäß zu verwendenden Isocyanaten allein oder im Gemisch mit anderen Isocyanaten dichte, nicht agglomerierte Mikrokapseln nach dem Grenzflächen-Polyadditionsverfahren herstellen lassen, die sich besonders gut für die Herstellung kohlefreier Durchschreibepapiere eignen. Beispiel 12 zeigt, daß mit anderen als erfindungsgemäß einzusetzenden Isocyanaten und sonst vergleichbarer Arbeitsweise wenig brauchbare Mikrokapseln erhalten werden. Beispiel 13 zeigt die Überlegenheit der erfindungsgemäß zu verwendenden Isocyanate bei der Herstellung hochkonzentrierter, agglomeratfreier Mikrokapseldispersionen.

Einzelheiten zu den Beispielen 3 bis 12 sind aus der nachfolgenden Tabelle ersichtlich.

**Tabelle**

| | | | | Vernetzer | | | | | | |
|---|---|---|---|---|---|---|---|---|---|---|
| Bei-spiel Nr. | Isocyanat (mischung)[1)] | NCO-Gehalt des Isocyanats Gew.-% [2)] | Wandanteil Gew.-% [3)] | Art | Menge Gew.-% [4)] | Farbgeber-lösung Nr. | Emulgier-energie (U/min) | mittlere Kapsel-größe (μm) | Dichtig-keit | Konzentration der Kapseldis-persion (Gew.-%) |
| 3 | A | 23,6 | 7 | GUCA | 100 | 1 | 7.500 | 7,5 | dicht | 52,0 |
| 4 | A | 23,6 | 5 | GUCA | 100 | 1 | 6.800 | 7,3 | dicht | 51,2 |
| 5 | A | 23,6 | 10 | GUCA | 100 | 1 | 7.800 | 7,6 | dicht | 52,2 |
| 6 | A | 23,6 | 7 | GUCA | 100 | 2 | 6.300 | 6,4 | dicht | 49,9 |
| 7 | A | 23,6 | 7 | GUCA + DETA | 50 | 3 | 7.600 | 6,8 | dicht | 51,0 |
| 8 | A | 23,6 | 7 | GUCA + DETA | 100 | 3 | 7.600 | 6,9 | dicht | 50,5 |
| 9 | A + UD, 1:1 | 22,7 | 10 | GUCA | 100 | 1 | 7.800 | 7,2 | dicht | 50,9 |
| 10 | A + BU, 1:4 | 23,1 | 10 | GUCA | 100 | 1 | 8.500 | 7,7 | dicht | 51,6 |
| 11 | A + IC, 1:9 | 22,0 | 10 | GUCA | 50 | 1 | 9.000 | 7,6 | leicht blau | 50,2 |
| 12 | ON (z.Vgl.) | 20,3 | 10 | GUCA | 100 | 1 | 10.500 | [6)] | blau | [6)] |

1) A = nach Beispiel 15 erhalten, UD = Uretdionpolyisocyanat (Desmodur® N 3400), BU = Biuretpolyisocyanat (Desmodur® N 3200), IC = Isocyanuratpolyisocyanat (Desmodur® N 3300), ON = Oxadiazintrionpolyisocyanat; die Zahlenangaben sind Gewichtsverhältnisse.
2) titrimetrisch bestimmt nach DIN 53 185.
3) bestimmt gemäß Definition 1 in der Beschreibung.
4) bezogen auf die stöchiometrisch erforderliche Menge.
5) 45 Gewichtsteile GUCA und 34,3 Gewichtsteile DETA.
6) während der Kapselbildung traten Agglomerationen auf, die Konzentration der Kapseldispersion wurde nicht bestimmt.

**Beispiel 13**

Dieses Beispiel zeigt die Überlegenheit der erfindungsgemäß einzusetzenden Isocyanate hinsichtlich der Herstellung hochkonzentrierter, agglomeratfreier Mikrokapseldispersionen.

Aus 444,4 g der auch in den Beispielen 3 bis 12 eingesetzten Farbgeberlösung 1 und 33,45 g des gemäß Beispiel 15 erhaltenen Isocyanats und einer Mischung aus 234 g einer 1 gew.-%igen wäßrigen Polyvinylalkohollösung und 84,6 g einer 10 gew.-%igen wäßrigen Guanidincarbonatlösung (beide hergestellt wie in den Beispielen 3 bis 12 beschrieben), wurde mittels eines Laborrührers eine grobe Voremulsion hergestellt. Diese Voremulsion wurde bei 25°C und einem hochtourigen Laboremulgiergerät (Megatron® , KINEMATICA AG) bei einer Drehzahl von 10 000 U/min in eine Feinemulsion überführt. Diese wurde unter schwachem Rühren mittels eines Wasserbades innerhalb einer Stunde auf 60°C erhitzt und bei dieser Temperatur noch eine Stunde gerührt. Anschließend wurde auf 75°C aufgeheizt und weitere 1,5 Stunden gerührt. Es resultierte eine agglomeratfreie Mikrokapseldispersion mit einem Feststoffgehalt von 60,2 Gew.-%, einer Viskosität von 145 mPa·s bei 25°C und mit einer mittleren Kapselgröße von 8,8 µm. Die Kapseln waren dicht. Der Feststoffgehalt, die Teilchengröße und die Kapseldichtigkeit wurden bestimmt wie bei den Beispielen 3 bis 12 angegeben, die Bestimmung der Viskosität erfolgte mit einem handelsüblichen Rotationsviskosimeter.

**Beispiel 14**

Das nachfolgende Beispiel bezieht sich auf die Mikroverkapselung eines Insekten-Repellents.

230 g N,N-Diethyltolylamid wurden unter leichtem Erwärmen in 230 g Kokosfett (COCOPUR® , Walter Rau GmbH, Neuss) gelöst. Die klare Lösung wurde mit 40 g des gemäß Beispiel 15 erhaltenen Isocyanats versetzt und bei 30°C bis zur völligen Auflösung gerührt. Das ergab die Lösung A.

Aus der Lösung A und 400 g einer 1,2 gew.-%igen Lösung von Polyvinylalkohol (AIRVOL® 325, Air Products) wurde mittels eines Laborrührers eine grobe Voremulsion hergestellt und diese danach mit einem hochtourigen LaborEmulgiergerät (MS 10/AA 11G, Fluid Kotthoff GmbH, Essen) bei etwa 8 000 U/min in 90 Sekunden zu einer feinteiligen Emulsion verarbeitet.

Hinzugefügt wurden nunmehr unter leichtem Rühren 101 g einer Lösung von 10 Gew.-% Guanidincarbonat in deionisiertem Wasser. Gleichzeitig wurde das Gemisch mit einem Wasserbad auf 70°C erhitzt und 2 Stunden bei 70°C nachgerührt.

Es wurde eine Mikrokapseldispersion mit einer mittleren Teilchengröße von 13,5 µm und einer Konzentration von 52,5 Gew.-% erhalten, in der das Repellent in mikroverkapselter Form vorlag.

**Beispiel 15**

Herstellung eines erfindungsgemäß einzusetzenden Isocyanates:

2000 g Hexamethylendiisocyanat wurden in einem 3 1 Vierhalskolben mit Innenthermometer, Rührer, Rückflußkühler, Gaseinleitungsrohr und Dosiereinrichtung für die Katalysatorlösung zunächst bei Zimmertemperatur und einem Druck von ca. 0,1 mbar im Verlauf einer Stunde von in dem Diisocyanat gelösten Gasen befreit und anschließend unter Durchleiten eines schwachen Stickstoffstromes auf 50°C Innentemperatur erhitzt. Anschließend wurden bei dieser Temperatur im Verlaufe von 90 Minuten portionsweise insgesamt 4,3 g einer 5 gew.-%igen Lösung von Benzyltrimethylammoniumfluorid (Aldrich) und 5 Äquivalenten HF (auf $F^-$ berechnet) in 2-Ethylhexanol so zugesetzt, daß die Innentemperatur 65°C nicht überstieg. Nach Erreichen eines Brechungsindexes $n_D^{20}$ von 1,4638 wurde durch Zugabe von 0,4 g Di-n-butylphosphat die Trimerisierung abgestoppt, eine weitere Stunde bei 50°C nachgerührt und anschließend von nicht umgesetzten monomeren Diisocyanaten durch Dünnschichtdestillation in einem Kurzwegverdampfer bei 0,1 mbar und einer Temperatur des Heizmediums von 170°C abgetrennt.

Man erhielt 480 g einer farblosen, klaren Isocyanatmischung mit folgenden Daten:

| | |
|---|---|
| NCO-Gehalt | 23,6 Gew.-% |
| Restmonomerengehalt | 0,01 Gew.-% Hexamethylendiisocyanat |
| molares Verhältnis von Isocyanuraten zu Iminooxadiazindionen der Formel (I) | 50 : 50 |

**Patentansprüche**

1. Mikrokapseln, dadurch gekennzeichnet, daß ihre Wände aus Umsetzungsprodukten von $NH_2$-Gruppen enthaltenden Vernetzern mit Isocyanaten der Formel (I) bestehen

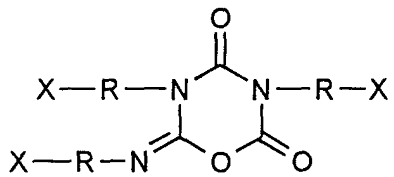

(I) ,

in der

die Reste R gleich oder verschieden sind und jeweils für zweibindiges, gegebenenfalls substituiertes $C_1$-$C_{20}$-(Cyclo)alkyl oder zweibindiges, gegebenenfalls substituiertes $C_7$-$C_{20}$-Aralkyl und

die Reste X gleich oder verschieden sind und jeweils für NCO oder einen Rest stehen, der durch die Entfernung von N-gebundenen Substituenten aus Oligomeren von Diisocyanaten entsteht, die Harnstoff-, Biuret-, Uretdion-, Isocyanurat-, Oxadiazintrion-, Urethan-, Allophanat- und/oder Iminooxadiazindion-Strukturelemente aufweisen, oder

daß ihre Wände Umsetzungsprodukte von $NH_2$-Gruppen enthaltenden Vernetzern mit Isocyanaten der Formel (I) enthalten.

**2.** Mikrokapseln nach Anspruch 1, dadurch gekennzeichnet, daß in Formel (I) R für gegebenenfalls substituiertes $C_1$-$C_{10}$-Alkyl und X für NCO und/oder einen Rest, der durch die Entfernung von N-gebundenen Substituenten aus Oligomeren von Isocyanaten der Formel (II)

$$OCN\text{-}R\text{-}NCO \qquad (II),$$

in der R die bei Formel (I) angegebene Bedeutung hat,
entsteht, wobei die Oligomeren Harnstoff-, Biuret-, Uretdion-, Isocyanurat-, Oxadiazintrion-, Urethan-, Allophanat- und/oder Iminooxadiazindion-Strukturelemente aufweisen.

**3.** Mikrokapseln nach Ansprüchen 1 und 2, dadurch gekennzeichnet, daß man Isocyanate der Formel (I) im Gemisch mit anderen Diisocyanaten einsetzt, wobei diese Gemische mindestens 20 Gew.-% Isocyanate der Formel (I) enthalten.

**4.** Mikrokapseln nach Ansprüchen 1 bis 3, dadurch gekennzeichnet, daß es sich bei dem Vernetzer um Guanidincarbonat handelt.

**5.** Verfahren zur Herstellung von Mikrokapseln der Ansprüche 1 bis 4, bei dem man eine Ölphase, die ein organisches, mit Wasser nicht mischbares, gegenüber Isocyanaten inertes Lösungsmittel, den zu verkapselnden Stoff und Isocyanate der Formel (I) enthält, in einer Wasserphase, die gegebenenfalls Zusatzstoffe enthält, emulgiert und der Emulsion einen $NH_2$-Gruppen enthaltenden Vernetzer zufügt, der mit Isocyanatgruppen reagieren kann.

**6.** Verfahren nach Anspruch 5, dadurch gekennzeichnet, daß es sich bei den organischen, mit Wasser nicht mischbaren, gegenüber Isocyanaten inerten Lösungsmitteln um alkylaromatische Kohlenwasserstoffe, substituierte Biphenyle, chlorierte Paraffine, Phthalate, natürliche Öle oder niedrigschmelzende Fette handelt.

**7.** Verfahren nach Ansprüchen 5 und 6, dadurch gekennzeichnet, daß die Wasserphase Emulgatoren, Stabilisatoren und/oder die Koaleszenz verhindernde Stoffe enthält.

**8.** Kohlefreie Durchschreibepapiere, die Farbgeber in mikroverkapselter Form enthalten, dadurch gekennzeichnet, daß die Wände der Mikrokapseln aus Umsetzungsprodukte aus Isocyanaten der Formel, entsprechend der in Anspruch 1 angegebenen Definition, (I) mit Vernetzern enthalten.

**Claims**

1. Microcapsules characterized in that their walls consist of reaction products of $NH_2$-containing crosslinkers with isocyanates of the formula (I)

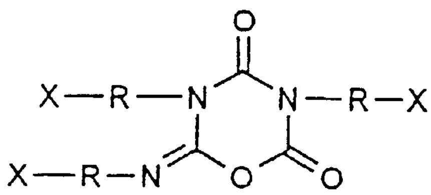

(I) ,

where

the R radicals are identical or different and are each divalent optionally substituted $C_1$-$C_{20}$-(cyclo)alkyl or divalent optionally substituted $C_7$-$C_{20}$-aralkyl and

the X radicals are identical or different and are each NCO or a radical formed by the removal of N-attached substituents from oligomers of diisocyanates having urea, biuret, uretidione, isocyanurate, oxadiazinetrione, urethane, allophanate and/or iminooxadiazinedione structural elements, or

in that their walls contain reaction products of $NH_2$-containing crosslinkers with isocyanates of the formula (I).

2. Microcapsules according to Claim 1, characterized in that in the formula (I) R is optionally substituted $C_1$-$C_{10}$-alkyl and X is NCO and/or a radical formed by the removal of N-attached substituents from oligomers of isocyanates of the formula (II)

$$OCN\text{-}R\text{-}NCO \qquad (II),$$

where R is as defined for the formula (I) and the oligomers have urea, biuret, uretidione, isocyanurate, oxadiazinetrione, urethane, allophanate and/or iminooxadiazinedione structural elements.

3. Microcapsules according to Claims 1 and 2, characterized in that isocyanates of the formula (I) are used in mixture with other diisocyanates, these mixtures containing at least 20% by weight of isocyanates of the formula (I).

4. Microcapsules according to Claims 1 to 3, characterized in that the crosslinker is guanidine carbonate.

5. Process for preparing microcapsules of Claims 1 to 4, which comprises emulsifying an oil phase which contains an organic water immiscible isocyanate-inert solvent, the substance to be encapsulated and isocyanates of the formula (I) in a water phase which optionally contains additives and adding to the emulsion an $NH_2$-containing crosslinker capable of reacting with isocyanate groups.

6. Process according to Claim 5, characterized in that the organic water-immiscible isocyanate-inert solvents are alkylaromatic hydrocarbons, substituted biphenyls, chlorinated paraffins, phthalates, natural oils or low-melting fats.

7. Process according to Claims 5 and 6, characterized in that the water phase contains emulsifiers, stabilizers and/or coalescence-inhibiting substances.

8. Carbonless copy papers containing colour formers in microencapsulated form, characterized in that the walls of the microcapsules consist of reaction products of isocyanates of the formula (I), as per the definition given in Claim 1, with crosslinkers.

## Revendications

1. Microcapsules, caractérisées en ce que leurs parois consistent en produits de réaction d'agents réticulants à groupes $NH_2$ et d'isocyanates de formule (I)

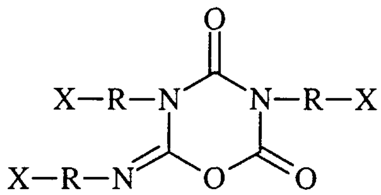

(I),

dans laquelle

les symboles R ayant des significations identiques ou différentes représentent chacun un groupe (cyclo)alkyle en $C_1$-$C_{20}$, éventuellement substitué, divalent, ou un groupe aralkyle en $C_7$-$C_{20}$, éventuellement substitué, divalent et
les symboles X ayant des significations identiques ou différentes, représentent chacun NCO ou un radical obtenu par élimination des substituants fixés sur l'azote d'oligomères de diisocyanates possédant des éléments de structure urée, biuret, uretdione, isocyanurate, oxadiazinetrione, uréthane, allophanate et/ou iminooxadiazinedione, ou bien

en ce que leurs parois contiennent des produits de réaction d'agents réticulants à groupes $NH_2$ et d'isocyanates de formule (I).

2. Microcapsules selon la revendication 1, caractérisée en ce que, dans la formule (I), les symboles R représentent des groupes alkyle en $C_1$-$C_{10}$ éventuellement substitués et les symboles X des groupes NCO ou des radicaux obtenus par élimination des substituants fixés sur l'azote d'oligomères d'isocyanates de formule (II)

$$OCN\text{-}R\text{-}NCO \qquad (II)$$

dans laquelle R a les significations indiquées en référence à la formule (I),
les oligomères en question possédant des éléments de structure urée, biuret, uretdione, isocyanurate, oxadiazinetrione, uréthane, allophanate et/ou iminooxadiazinedione.

3. Microcapsules selon les revendications 1 et 2, caractérisées en ce que l'on utilise des isocyanates de formule (I) en mélange avec d'autres diisocyanates, ces mélanges contenant au moins 20 % en poids d'isocyanates de formule (I).

4. Microcapsules selon les revendications 1 à 3, caractérisées en ce que l'agent réticulant est le carbonate de guanidine.

5. Procédé de préparation des microcapsules selon les revendications 1 à 4, dans lequel on émulsionne une phase huileuse contenant un solvant organique inerte à l'égard des isocyanates et non miscible à l'eau, la substance à encapsuler et des isocyanates de formule (I), dans une phase aqueuse contenant le cas échéant des additifs et on ajoute à l'émulsion un agent réticulant à groupes $NH_2$ capable de réagir avec les groupes isocyanate.

6. Procédé selon la revendication 5, caractérisé en ce que les solvants organiques inertes à l'égard des isocyanates et non miscibles à l'eau sont des hydrocarbures alkylaromatiques, des biphényles substitués, des paraffines chlorées, des phtalates, des huiles naturelles ou des matières grasses à bas point de fusion.

7. Procédé selon les revendications 5 et 6, caractérisé en ce que la phase aqueuse contient des agents émulsionnants, des stabilisants et/ou des additifs évitant la coalescence.

8. Papiers à copier sans carbone, contenant des chromogènes à l'état microencapsulé et caractérisés en ce que les

parois des microcapsules contiennent des produits de réaction d'isocyanates de formule (I) de la revendication 1 et d'agents réticulants.